# FASCICULE DE BREVET EUROPEEN

(11) **EP 0 915 786 B1**
(45) Date de publication et mention de la délivrance du brevet: **07.04.2004**
(21) Numéro de dépôt: 98929537.3
(22) Date de dépôt: 10.06.1998
(51) Int. Cl.: B60S 1/52, B05B 1/04, B60S 1/60

(54) **SYSTEME DE NETTOYAGE D'UNE SURFACE, TELLE QU'AU MOINS UN PROJECTEUR FRONTAL DE VEHICULE AUTOMOBILE**
REINIGUNGVORRICHTUNG EINER OBERFLÄCHE, SO WIE EINES SCHEINWERFERS VON KRAFTFAHRZEUGEN
SYSTEM FOR CLEANING A SURFACE, SUCH AS AT LEAST ONE MOTOR VEHICLE HEADLIGHT

(30) Priorité: 11.06.1997 FR 9707244
(43) Date de publication de la demande: 19.05.1999
(73) Titulaire: SOCIETE D'ETUDES ET DE REALISATIONS INDUSTRIELLES ET COMMERCIALES SERIC, 77820 Le Chatelet en Brie (FR)
(72) Inventeur: TORES, Denis, F-77000 Vaux-le-Penil (FR)
(74) Mandataire: Derambure, Christian
(86) Numéro de dépôt international: PCT/FR1998/001188
(87) Numéro de publication internationale: WO 1998/056628

(56) Documents cités:
- EP-A- 0 306 378
- DE-A- 1 655 857
- DE-A- 1 913 810
- DE-A- 4 324 259
- DE-A- 4 422 590
- GB-A- 2 122 920

## Description

L'invention concerne un dispositif de nettoyage d'une surface faisant partie d'un ensemble, au moyen d'un liquide. La surface à nettoyer est de dimension relativement faible, et est susceptible de recevoir des salissures.

L'invention concerne également un système de nettoyage d'une surface du type précité, comprenant le dispositif de nettoyage précité, ainsi qu'un réservoir destiné à contenir le liquide de nettoyage, et un tuyau principal reliant le réservoir au dispositif de nettoyage.

Enfin, l'invention concerne un ensemble adapté à être déplacé, notamment du type une partie au moins d'un véhicule, comprenant au moins une surface et un système de nettoyage du type précités.

L'exemple de réalisation de l'invention qui va être décrit est plus particulièrement appliqué aux projecteurs frontaux, formant la surface à nettoyer, ou de manière plus large à la surface protégeant le dispositif lumineux, par exemple frontal, d'un véhicule, notamment automobile.

Un certain nombre de véhicules, notamment les véhicules de haute gamme en France, ainsi que les véhicules de l'Europe du Nord, en raison de normes imposées, sont équipés d'un système de nettoyage des projecteurs frontaux.

Deux types de systèmes de nettoyage sont actuellement utilisés.

Un premier type de système de nettoyage comporte un dispositif de nettoyage télescopique.

Plus précisément, la buse de distribution et de pulvérisation, à l'état de repos, est noyée dans le volume du véhicule.

Dès la sollicitation du système, une pompe met le circuit en pression afin de pousser, en position sortie, le télescope qui comporte à son extrémité libre la buse et pulvériser le liquide vers sa cible.

Un deuxième type de système de nettoyage de l'art antérieur comporte un dispositif de nettoyage extérieur à la carrosserie du véhicule et fixe par rapport à la cible.

Plus précisément, dès la sollicitation du système, une pompe met le circuit en pression afin de propulser le liquide via une buse de pulvérisation vers sa cible.

Ces deux types de système de nettoyage font appel à une pompe qui délivre une pression élevée avec un fort débit pour pousser le télescope et/ou pulvériser le liquide.

De ce fait, il est nécessaire d'utiliser des tuyauteries et une buse adaptées en conséquence.

De plus, plus la pression est grande, et plus le liquide éjecté "rebondit" sur la surface visée. Le nettoyage perd donc de son efficacité et une partie du liquide risque d'être éjectée en dehors de la surface.

Bien que des systèmes de nettoyage des vitres de véhicule existent, il s'avère que ceux-ci sont inutilisables pour une telle application.

En effet, les systèmes de nettoyage des vitres utilisent une pression et une quantité de liquide plus faibles, qui ne permettraient pas le fonctionnement du télescope ou la pulvérisation du liquide.

Un système tout à fait particulier pour le nettoyage des projecteurs doit donc être conçu. Ce qui est relativement coûteux.

D'autre part, le nettoyage par pulvérisation présente un certain nombre d'inconvénients, outre la pression importante nécessaire.

En effet,
- la consommation de liquide est très importante ;
- le liquide pulvérisé n'est pas entièrement projeté sur la surface à nettoyer et une perte non négligeable du liquide en-dehors de la cible a lieu ;
- l'utilisation d'un agent additionné à de l'eau, tel que notamment un agent de nettoyage ou un agent anti-gel, n'est possible qu'au moment de l'arrêt du véhicule. En effet, l'emploi par exemple d'un mélange d'eau et d'anti-gel, tel que du glycol, provoque, dès sa pulvérisation, une émulsion mousseuse qui colle sur la vitre du projecteur. Or, l'ajout d'un agent anti-gel est indispensable dans les pays nordiques, où des normes imposent l'utilisation d'un système de nettoyage des projecteurs en raison notamment de la fréquence de neige et de gel. De plus, le nettoyage au moyen notamment de l'agent anti-gel doit pouvoir être effectué tant à l'arrêt du véhicule que pendant son déplacement, quelle que soit sa vitesse.

Les systèmes de l'art antérieur sont donc inefficaces.

Non seulement le nettoyage des projecteurs est insuffisant, mais l'efficacité lumineuse de ces derniers est également affaiblie.

Le document EP-A-0 306 378 décrit un dispositif pour laver la glace d'un projecteur dont l'ouverture de sortie du gicleur est conformée pour délivrer un jet de liquide en forme de lame.

Toutefois, ce dispositif ne permet pas de former un jet de forme déterminée, et ce, en distribuant le liquide à une pression sensiblement faible.

L'invention a donc pour but de pallier les inconvénients de l'art antérieur.

Un objectif de l'invention est de pouvoir fabriquer en grande série des systèmes de nettoyage, du type précité, notamment pour les projecteurs de véhicules, et de permettre une standardisation des pièces les composant.

Un autre objectif de l'invention est de réduire les coûts de fabrication et d'installation du système de nettoyage.

Un autre objectif de l'invention est également de réduire la consommation de liquide, ainsi que la pression du liquide à projeter, afin notamment de réduire la taille des pièces composant le système de nettoyage.

Enfin, l'invention a également pour but de permettre une parfaite efficacité de nettoyage tant à l'arrêt du véhicule - et, d'une manière générale, de l'ensemble comportant la surface à nettoyer - que lorsqu'il est en mouvement, quelque soit sa vitesse.

A cet effet, l'invention concerne un système de nettoyage, au moyen d'un liquide, d'une surface faisant partie d'un ensemble, ladite surface étant de dimension relativement faible, et étant susceptible de recevoir des salissures, ladite surface étant en outre notamment délimitée par un bord supérieur et un bord inférieur sensiblement horizontaux et en regard l'un de l'autre, le système de nettoyage comprenant des moyens d'amenée du liquide et un dispositif de nettoyage comportant :
- un conduit d'amenée du liquide, relié aux moyens d'amenée ;
- au moins un conduit de sortie du liquide, en communication avec le conduit d'amenée par l'intermédiaire d'un trou de communication ; et
- des moyens de diffusion en communication avec le ou les conduits de sortie du côté opposé au trou de communication ;
les moyens de diffusion étant réalisés de sorte qu'ils diffusent de manière sensiblement uniforme le liquide suivant une ligne sensiblement parallèle et située vers le bord supérieur de la surface, le liquide étant distribué sur ladite surface en nappe s'étendant entre sensiblement le bord supérieur et sensiblement le bord inférieur de la surface ; et les moyens d'amenée étant conformés de manière à distribuer le liquide à pression sensiblement faible; les moyens de diffusion comprenant une pièce creuse comportant une première ouverture en communication avec le ou les conduits de sortie et une seconde ouverture allongée, opposée à la première ouverture et en communication avec l'extérieur du dispositif de nettoyage, ledit système étant caractérisé en ce que la seconde ouverture est disposée par rapport à la première ouverture de sorte que le liquide destiné à provenir du conduit de sortie soit défléchi contre une paroi de la pièce creuse, ladite paroi étant en regard de la première ouverture.

Selon un mode de réalisation de l'invention, la pièce creuse présente une forme générale de prisme, délimitée d'une part, par une première et une deuxième parois, opposées et en regard, et d'autre part, par une pluralité de parois latérales adjacentes, reliant entre elles les première et deuxième parois.

Plus précisément, la première paroi délimite au moins pour partie la première ouverture tandis que la deuxième paroi délimite au moins pour partie la seconde ouverture.

Suivant un mode de réalisation, le dispositif de nettoyage est réalisé de sorte que la seconde ouverture soit orientable par rapport à la surface à nettoyer.

L'invention concerne également un système de nettoyage, au moyen d'un liquide, d'une surface faisant partie d'un ensemble, ladite surface étant de dimension relativement faible et susceptible de recevoir des salissures, un bord supérieur et un bord inférieur, en regard l'un de l'autre et sensiblement horizontaux, délimitant notamment la surface.

Le système de nettoyage comprend des moyens d'amenée du liquide et un dispositif de nettoyage tel que précités, un réservoir destiné à contenir le liquide de nettoyage et un tuyau principal reliant le réservoir au conduit d'amenée du dispositif de nettoyage.

Suivant un mode de réalisation de l'invention, le système de nettoyage peut comporter en outre une pompe montée sur le réservoir et reliée au tuyau principal ; et/ou un clapet anti-retour, disposé à la jonction entre le tuyau principal et le conduit d'amenée du dispositif de nettoyage.

Le liquide est de l'eau ou de l'eau additionnée à un agent anti-gel, tel que notamment du glycol, et/ou à un agent de nettoyage.

Selon l'invention, le système de nettoyage est réalisé de sorte que la pression du liquide devant être distribué est faible.

La pression du liquide est par exemple de l'ordre de 60% inférieure à celle utilisée pour les systèmes de nettoyage de projecteurs de l'art antérieur.

Le dispositif de nettoyage est disposé de sorte que la seconde ouverture s'étende sensiblement parallèlement au bord supérieur de la surface à nettoyer.

Suivant un mode de réalisation, le dispositif de nettoyage est fixé à proximité du bord inférieur de la surface, la seconde ouverture s'étendant sensiblement parallèlement et étant dirigée vers le bord supérieur.

Suivant un autre mode de réalisation, le dispositif de nettoyage est fixé à proximité du bord supérieur de la surface, la seconde ouverture étant proche, en regard et sensiblement parallèle audit bord.

Enfin, l'invention est relative à un ensemble adapté à être déplacé, notamment du type une partie au moins d'un véhicule, comprenant :
- au moins une surface de relativement faible dimension par rapport à l'ensemble, et susceptible de recevoir des salissures, ladite surface étant notamment du type protégeant le dispositif lumineux, par exemple frontal, d'un véhicule ; et
- un système de nettoyage de la surface tel que précité.

Suivant un premier mode de réalisation, l'ensemble forme une partie au moins d'un véhicule automobile, la surface à nettoyer étant un projecteur frontal du véhicule automobile.

Suivant un deuxième mode de réalisation, l'ensemble forme une partie au moins d'un véhicule automobile, et comprend au moins deux surfaces à nettoyer correspondant respectivement à un projecteur frontal du véhicule automobile.

Dans ce mode de réalisation, l'ensemble comporte un dispositif de nettoyage par projecteur, les dispositifs de nettoyage étant reliés au tuyau principal par l'intermédiaire d'un tuyau supplémentaire respectif, en communication d'une part avec le conduit d'amenée du dispositif de nettoyage et d'autre part avec un raccord en Té, lui-même relié au tuyau principal.

Selon un mode de réalisation de l'invention, le (ou les) dispositif(s) de nettoyage est (sont) fixé(s) rigidement en saillie par rapport à la carrosserie du véhicule automobile de sorte qu'il(s) ne dépasse(nt) pas l'aplomb du véhicule automobile.

Suivant une réalisation de l'invention, le réservoir et les tuyaux sont du type de ceux utilisés pour le nettoyage des vitres, telles que le pare-brise, d'un véhicule automobile.

On peut en outre prévoir que le réservoir soit commun à celui utilisé pour le nettoyage du pare-brise avant et/ou de la lunette arrière du véhicule automobile.

Dans le cas où le véhicule automobile ne comporte pas de système de nettoyage de la lunette arrière -ce qui est souvent le cas pour les véhicules tri-corps où, outre le moteur, le coffre est indépendant de l'habitacle- on peut prévoir d'utiliser un unique réservoir et une unique pompe bi-directionnelle pour le système de nettoyage du ou des projecteurs et le système de nettoyage du pare-brise avant.

D'autres particularités de l'invention seront décrites en référence aux dessins annexés, donnés à titre d'exemples non limitatifs.

La figure 1 représente une vue éclatée schématique d'un système de nettoyage de deux projecteurs d'un véhicule selon l'invention.

La figure 2 représente une vue schématique partielle de la partie frontale d'un véhicule automobile, avec l'un de ses projecteurs en cours de nettoyage.

La figure 3 représente une vue latérale schématique agrandie de la portion du véhicule de la figure 2, montrant un exemple d'emplacement du dispositif de nettoyage par rapport au projecteur.

Les figures 4a, 4b, 4c représentent schématiquement un premier mode de réalisation du dispositif de nettoyage de l'invention. La figure 4a représente une vue de face du dispositif de nettoyage, tandis que les figures 4b et 4c représentent une vue en coupe axiale, de deux variantes de réalisation.

La figure 4d représente une vue schématique en perspective des moyens de diffusion correspondant à la variante de la figure 4c.

Les figures 5a, 5b, 5c représentent schématiquement un deuxième mode de réalisation du dispositif de nettoyage de l'invention. La figure 5a représente une vue de face du dispositif de nettoyage, tandis que les figures 5b et 5c représentent une vue en coupe axiale, de deux variantes de réalisation.

La figure 6 représente une vue schématique de dessus, en coupe transversale, d'un mode de réalisation de la pompe.

La figure 7 représente une vue schématique, en coupe longitudinale, d'un mode de réalisation du dispositif de nettoyage monté sur un bouclier de véhicule.

Comme cela a été indiqué précédemment, les modes de réalisation du système de nettoyage qui vont être décrits s'appliquent plus particulièrement aux projecteurs frontaux d'un véhicule, notamment automobile.

Il est entendu que ces modes de réalisation peuvent être également appliqués plus largement aux vitres, protégeant par exemple les dispositifs lumineux d'un véhicule, et à toute surface de relativement faible dimension et pouvant éventuellement subir un déplacement.

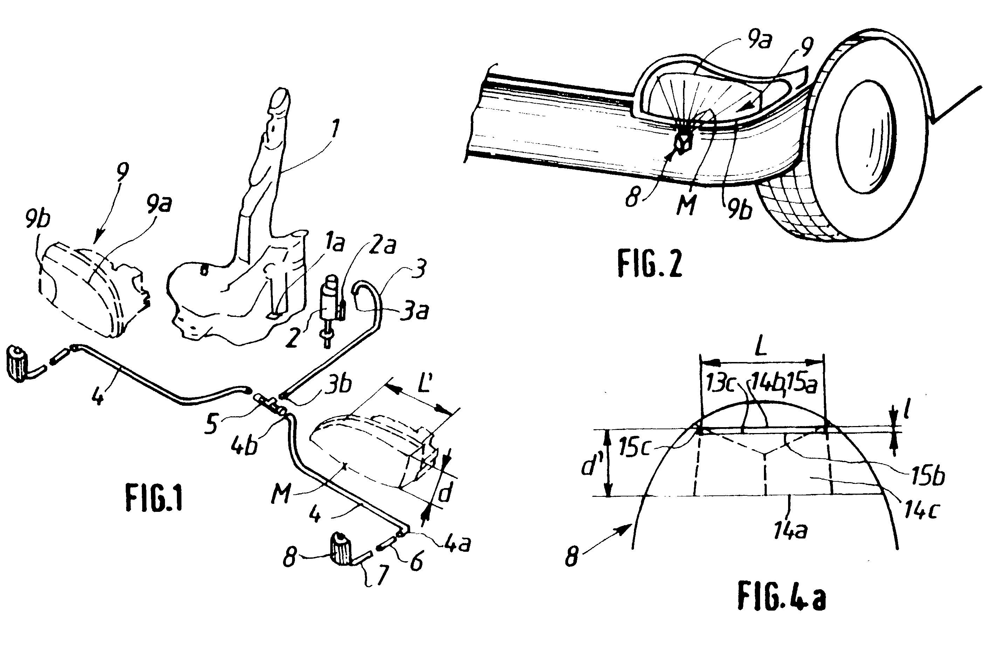

La figure 1 représente un mode de réalisation d'un système de nettoyage simultané, ou quasi-simultané, des deux projecteurs frontaux d'un véhicule.

Ce système comporte un réservoir 1, destiné à contenir le liquide de nettoyage, une pompe 2, destinée à être montée sur le réservoir 1 au niveau d'une ouverture la et à pomper le liquide en fonction des besoins.

La pompe 2 comporte un orifice de sortie 2a, destiné à recevoir une extrémité 3a d'un tuyau principal 3.

L'autre extrémité 3b du tuyau principal 3 est raccordée à deux tuyaux supplémentaires 4 au moyen d'un raccord en Té 5.

L'extrémité libre respective 4a de chaque tuyau supplémentaire 4, opposée à celle 4b raccordée au raccord 5, est connectée à un clapet anti-retour 6.

Le clapet 6 est relié lui-même, du côté opposé à l'extrémité libre 4a, à une portion de tuyau 7 en communication avec un dispositif de nettoyage 8.

Le raccord en Té 5 et les clapets anti-retour 6 sont du type conventionnel et ne seront donc pas décrits plus en détail.

Le tuyau principal 3, les tuyaux supplémentaires 4 ainsi que la portion de tuyau 7 sont réalisés en matière plastique, par exemple en Polychlorure de Vinyle (PVC), en caoutchouc EPDM (éthylène-propylène-diène-monomère).

Ils présentent par exemple un diamètre minimal d'environ 3,5 mm, notamment un diamètre compris entre environ 4 et environ 6 millimètres.

Toujours à titre d'exemple, la longueur du tuyau principal 3 -comptée suivant son axe- est de l'ordre de 2 mètres, tandis que celle de chaque tuyau supplémentaire 4 est de l'ordre de 1 mètre et la longueur de chaque portion de tuyau 7 est de l'ordre de 70 millimètres.

Pour une plus grande efficacité et une meilleure standardisation, le réservoir 1 et la pompe 2 peuvent être du type de ceux utilisés pour le nettoyage des vitres, telles que notamment le pare-brise, des véhicules automobiles.

Dans un mode de réalisation, on peut par exemple prévoir que le réservoir 1 du système de l'invention soit commun avec le réservoir de nettoyage du pare-brise d'un véhicule.

Selon un mode d'exécution, le réservoir 1 est placé dans une zone protégée du froid.

Par exemple, le réservoir 1 est placé à l'intérieur d'une aile du véhicule, ou dans le compartiment moteur, pour bénéficier d'un réchauffement par rayonnement de la chaleur dégagée par le moteur, en fonctionnement.

La capacité du réservoir 1 doit généralement satisfaire les normes imposées.

Ainsi, dans un exemple de réalisation, le volume de liquide utilisable par la pompe 2 doit permettre d'effectuer environ cinquante cycles de nettoyage.

Un cycle de nettoyage est défini par un nombre d'impulsions déterminées.

Dans le cas où le réservoir 1 est commun avec celui utilisé pour le nettoyage du pare-brise, il doit rester au minimum un volume de liquide de l'ordre d'un litre pour le nettoyage du pare-brise.

Quant à la pompe 2, elle est par exemple du type comportant un plongeur et un moteur à courant continu, destiné à être branché par exemple sur la batterie d'un accumulateur.

Le moteur comporte un arbre de sortie axial, pivotant, à l'extrémité duquel est monté un rotor.

Le plongeur comporte une ouverture terminale d'entrée du liquide, en communication avec l'ouverture la du réservoir 1, et est d'autre part en communication avec l'orifice de sortie 2a.

Plus précisément, le plongeur comprend principalement un conduit présentant ladite ouverture terminale d'entrée ainsi qu'un bord latéral intérieur.

Le plongeur comprend également une tige d'amorçage de la pompe, qui est logée coaxialement dans le conduit et qui est reliée de manière fixe au rotor. Ce dernier commande le mouvement de rotation de la tige d'amorçage autour de l'axe longitudinal du rotor.

La pompe 2 a donc pour fonction d'aspirer le liquide de lavage contenu dans le réservoir 1, par l'intermédiaire du conduit pour être refoulé dans le tuyau principal 3, via l'orifice de sortie 2a.

Le système peut en outre comporter des moyens de réglage de la quantité de liquide extraite par la pompe 2 à chaque impulsion.

On peut en outre prévoir d'installer par exemple sur la pompe 2, un temporisateur réglable (non représenté).

Différents types de pompes fonctionnant à basse pression peuvent être utilisés.

Selon un mode de réalisation, la pompe 2 est une pompe classique à sortie unique.

Selon un autre mode de réalisation, la pompe 2 est une pompe à deux sorties, permettant la sortie du liquide de nettoyage par l'une ou l'autre des sorties en alternance, ou par les deux sorties simultanément.

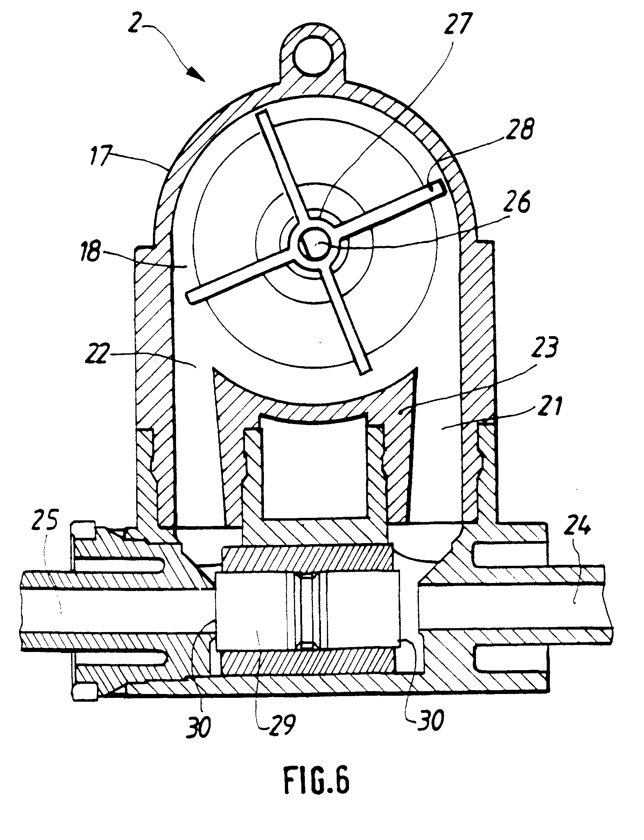

Un exemple de pompe 2 à deux sorties permettant le refoulement du liquide en alternance par l'une ou l'autre des deux sorties est représenté sur la figure 6.

La pompe 2 comprend un corps 17 formant support et protection, un moteur et un connecteur électrique (non représentés) permettant la connexion à une batterie d'accumultaeurs.

Le corps 17 délimite à l'intérieur de la pompe 2 une chambre 18 ayant un orifice d'entrée pour le liquide de nettoyage (non représenté).

La chambre 18 est prolongée à sa partie inférieure par deux conduits 21 et 22 sensiblement parallèles entre eux séparés par une paroi 23.

Les deux conduits 21 et 22 sont prolongés, à leur extrémité opposée à la chambre 18, par deux orifices de sortie latéraux 24 et 25 respectivement.

Les orifices de sortie 24 et 25 sont disposés de façon que leurs axes longitudinaux soient sensiblement confondus, l'une des extrémités des orifices de sorties 24 et 25 étant située au voisinage des conduits 21 et 22 respectivement, l'autre extrémité des orifices de sortie 24 et 25 débouchant vers l'extérieur.

Le moteur possède un arbre de sortie 26, axial, qui pénètre dans la chambre 18.

Sur la partie extrême de l'arbre 26 située dans la chambre 18 est monté, calé angulairement, un rotor 27 à ailettes 28.

Le pivotement du rotor 27 provoque alors la circulation circonférentielle du liquide dans la chambre 18, grâce aux ailettes 28, de l'orifice d'entrée aux orifices de sortie 24 et 25 en passant par les conduits 21 et 22.

Entre les deux orifices de sortie 24 et 25, est monté un piston 29, de dimension longitudinale inférieure à la distance entre les deux extrémités des orifices de sortie 24 et 25 situées au voisinage des conduits 21 et 22.

Le piston 29 est capable de coulisser en translation vers l'un ou l'autre des orifices de sortie 24 et 25.

Le contact de l'une des extrémités 30 du piston 29 avec l'extrémité de l'un des orifices de sortie 24 ou 25 située au voisinage des conduits 21 et 22 entraîne l'obturation de cet orifice de sortie 24 ou 25, le liquide ne pouvant alors être évacué à l'extérieur de la pompe 2 que par l'autre orifice de sortie.

Ainsi, en se référant à la figure 6, lorsque le rotor 27 tourne dans le sens horaire, le liquide arrivant par le conduit 21 pousse le piston 29 contre l'orifice de sortie 25, obturant ainsi l'orifice 25, et le liquide sort de la pompe 2 par l'orifice de sortie 24.

Il est entendu par ailleurs que le nombre de tuyaux 3, 4 et 7 ainsi que leurs caractéristiques ne sont donnés qu'à titre d'exemples non limitatifs.

Suivant les modes de réalisation, il est en effet envisageable d'adapter les tuyaux 3, 4, 7, en fonction par exemple du type de pompe utilisé.

Ainsi, lorsque la pompe utilisée est du type à sortie unique, le liquide sortant de la pompe passe par une dérivation ou raccord en Té ou Y, pour alimenter les deux dispositifs de nettoyage 8.

Il est ainsi possible suivant le mode de réalisation de ce raccord, qu'une perte de charge apparaisse, conduisant à un volume de liquide distribué plus faible vers l'un des dispositifs de nettoyage 8.

Dans un tel cas, cette perte de charge peut être compensée en prévoyant que le tuyau 4 relié à la sortie d'un raccord 5 présentant le débit le plus faible et alimentant un dispositif de nettoyage 8, soit d'une longueur réduite par rapport au second tuyau 4 relié à la sortie du même raccord 5 présentant le débit le plus important.

Un agencement similaire des tuyaux 4 peut être prévu avec certaines pompes à deux sorties, pouvant présenter également des pertes de charge à l'un des orifices de sortie de la pompe.

Suivant le type de pompe utilisé, on pourrait également prévoir par exemple l'absence de portion de tuyau 7 ou l'utilisation de deux conduits principaux 3, raccordés directement chacun au dispositif de nettoyage 8.

Les éléments constitutifs du système qui viennent d'être décrits, à l'exception du dispositif de nettoyage 8, sont installés à l'intérieur du véhicule. Ils sont donc cachés par la carrosserie.

Leur forme et leur dimension sont par conséquent adaptées à leur emplacement. On peut ainsi par exemple envisager de couder les tuyaux principaux 3 et supplémentaires 4.

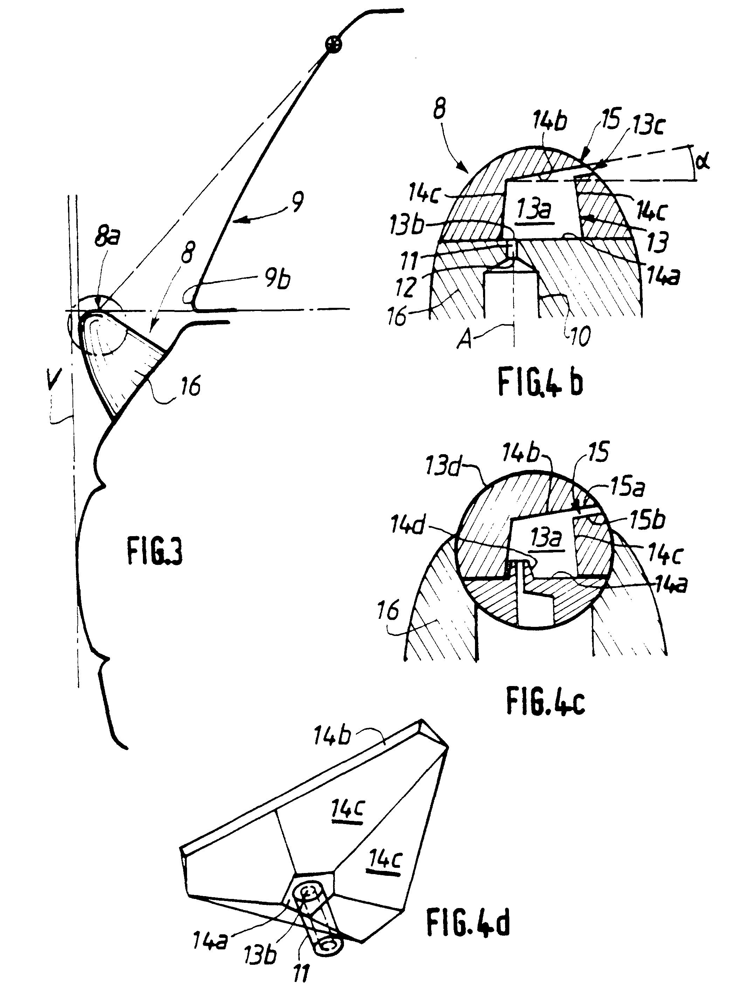

Comme représenté sur les figures 2 et 3, chaque dispositif de nettoyage 8 est disposé en saillie à l'extérieur du véhicule par rapport à sa carrosserie.

La surface à nettoyer 9, par exemple un projecteur frontal d'un véhicule est généralement définie par un bord supérieur 9a et un bord inférieur 9b. Ces bords 9a et 9b sont sensiblement horizontaux et en regard l'un de l'autre, le bord inférieur 9b étant situé plus proche des roues du véhicule.

Les projecteurs des véhicules sont généralement de forme sensiblement rectangulaire ou ellipsoïdale.

Le dispositif de nettoyage 8 de l'invention est fixé rigidement et de manière étanche soit sur le bouclier, soit sur la calandre du véhicule ou soit directement sur l'un des bords, supérieur ou inférieur 9a, 9b, du projecteur.

Suivant un mode de réalisation de l'invention, les dimensions et la disposition du dispositif de nettoyage 8 sont telles qu'il ne dépasse pas l'aplomb du véhicule.

Comme cela est indiqué sur la figure 3, la partie extrême libre 8a du dispositif de nettoyage 8 ne dépasse pas la ligne verticale V définie par la partie la plus en avant du véhicule.

En référence aux figures 4a à 4d, on décrit maintenant un premier mode de réalisation du dispositif de nettoyage 8 de l'invention.

Celui-ci comporte un conduit d'amenée 10 du liquide, qui est destiné à être raccordé à l'extrémité libre de la portion de tuyau 7, ou dans un autre mode de réalisation, directement au clapet anti-retour 6.

Du côté opposé à la portion de tuyau 7, ou le cas échéant, au clapet anti-retour 6, le conduit d'amenée 10 est en communication avec un conduit de sortie 11 du liquide, par l'intermédiaire d'un trou de communication 12.

Dans le présent mode de réalisation, le conduit d'amenée 10 et le conduit de sortie 11 s'étendent suivant sensiblement une même direction.

On pourrait néanmoins prévoir qu'ils s'étendent de manière inclinée l'un par rapport à l'autre.

D'autre part, le conduit d'amenée 10 présente une section transversale de dimension supérieure à celle du conduit de sortie 11.

Dans les modes de réalisation représentés, le conduit d'amenée 10 et le conduit de sortie 11 présentent respectivement une section transversale constante et circulaire le long de leur axe.

Comme il sera vu plus loin, la dimension de la section transversale du conduit de sortie 11 permet le calibrage du jet de liquide devant être distribué.

Dans le présent mode de réalisation, un seul conduit de sortie 11 est prévu.

On pourrait néanmoins prévoir qu'une pluralité de conduits de sortie 11 soient en communication par l'intermédiaire de plusieurs trous de communication 12, avec le conduit d'amenée 10. Ces conduits de sortie 11 pourraient s'étendre suivant une même direction ou suivant des directions différentes, sensiblement inclinées par rapport au conduit d'amenée 10.

Du côté opposé au trou de communication 12, le conduit de sortie 11 est en communication avec des moyens de diffusion 13.

Les moyens de diffusion 13 se présentent sous la forme d'une pièce ou capsule creuse 13a, formant buse de distribution de liquide.

La capsule 13a comporte une première ouverture 13b en communication avec le conduit de sortie 11 et une seconde ouverture 13c allongée et étroite, opposée à la première ouverture 13b et en communication avec l'extérieur du dispositif de nettoyage 8.

Dans le mode de réalisation représenté, la capsule 13a présente généralement une forme de prisme, par exemple de parallélépipède.

Une première paroi 14a comporte la première ouverture 13b. Elle s'étend dans un plan sensiblement perpendiculaire à l'axe A du conduit de sortie 11.

Une deuxième paroi 14b, opposée et en regard à la première paroi 14a, est prolongée par un bec 15 débouchant sur l'extérieur du dispositif de nettoyage 8 au moyen de la seconde ouverture 13c.

La première et la deuxième parois 14a et 14b sont reliées entre elles par une pluralité de parois 14c, de manière à former entre elles un espace prismatique (voir figure 4d).

Les parois 14c s'étendent chacune respectivement dans un plan incliné, de préférence différent de 90°, par rapport aux parois 14a et 14b.

Comme représenté sur les figures 4b et 4c, le bec 15 est formé de deux faces 15a et 15b écartées et en regard. La face 15a prolonge la paroi 14b, tandis que la face 15b est attenante et sensiblement perpendiculaire à la paroi 14c correspondante.

Du fait de sa position par rapport à la première ouverture 13b, la deuxième paroi 14b a pour fonction de défléchir le jet de liquide provenant du conduit de sortie 11, pour le diriger dans le bec 15 et l'éjecter en ligne de manière uniforme, par la seconde ouverture 13c, en vue de former une nappe.

Dans les modes de réalisation représentés, la paroi déflectrice 14b est inclinée par rapport à la première paroi 14a, d'un angle α d'environ 15° à 25°, notamment 21°.

La forme de la paroi déflectrice 14b détermine la forme de la nappe de liquide destinée à être projetée sur le projecteur 9.

Elle peut donc être modifiée en fonction de la forme souhaitée de la nappe.

De plus, les faces 15a et 15b du bec convergent vers la seconde ouverture 13c.

De manière à contrôler la distribution de la nappe, les faces 15a et 15b sont reliées entre elles à leur extrémité respective par respectivement un flanc latéral 15c.

Le bec 15 présente ainsi une section transversale sensiblement rectangulaire ; les deux flancs latéraux 15c étant en regard l'un de l'autre.

La seconde ouverture 13c présente ainsi également un contour sensiblement rectangulaire.

La dimension de la première ouverture 13b est sensiblement égale ou supérieure à la dimension de la section transversale du conduit de sortie 11, au niveau de sa jonction avec les moyens de diffusion 13.

De plus, dans la réalisation représentée à la figure 4d, la première paroi 14a présente un périmètre légèrement supérieur à la section transversale du conduit de sortie 11, de sorte que le contour de la première paroi 14a est proche de celui de l'ouverture 13b.

D'autre part, dans un exemple de réalisation, pour une section de conduit de sortie 11 présentant un diamètre de 1,5 millimètre, la distance minimum d' séparant la paroi 14a de la paroi 14b est de l'ordre de 5,8 millimètres, soit de l'ordre de quatre fois plus grande.

Les orientations de la paroi déflectrice 14b et de la face 15b, ainsi que la distance d' sont notamment fonction de la forme de nappe souhaitée, celle-ci pouvant être symétrique ou asymétrique -c'est-à-dire avec un endroit particulier devant comporter plus de liquide-.

Dans une variante de réalisation représentée à la figure 4c, la capsule 13a est inscrite dans une sphère 13d et la première paroi 14a comporte une encoche 14d vers l'intérieur de la capsule 13a. Cette encoche 14d comporte la première ouverture 13b.

En outre, le conduit de sortie 11 est adapté pour être introduit à l'intérieur de cette encoche 14d, de manière à former un pivot pour la sphère 13d et donc la capsule 13a.

Celle-ci, et plus précisément la seconde ouverture 13c, peuvent ainsi être orientables par rapport à la surface à nettoyer.

Bien entendu, d'autres moyens d'orientation de la seconde ouverture 13c peuvent être envisagés. Par exemple, on peut prévoir d'orienter les moyens de diffusion au niveau du conduit d'amenée 10.

La figure 4a montre clairement la forme allongée et étroite de la seconde ouverture 13c.

Dans un mode de réalisation, la dimension la plus grande L de la seconde ouverture est de l'ordre d'environ 22 fois plus petite que la longueur L' du bord supérieur 9a du projecteur 9.

En outre, la dimension la plus petite 1 de la seconde ouverture 13c -c'est-à-dire la distance séparant les faces 15a et 15b au niveau de l'ouverture 13c- est de l'ordre d'environ 100 fois plus petite que la distance d séparant le bord supérieur 9a du bord inférieur 9b du projecteur 9.

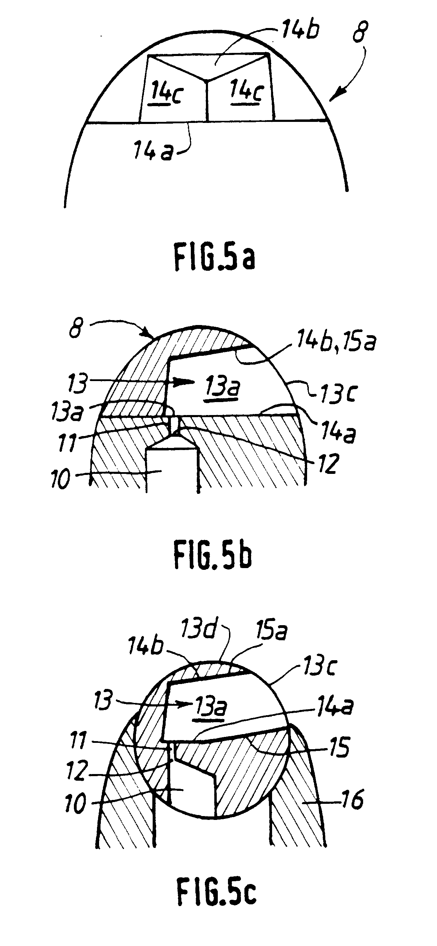

Dans le mode de réalisation des figures 5a à 5c, le dispositif de nettoyage 8 comporte également un conduit d'amenée 10 et un conduit de sortie 11, sensiblement similaires à ceux des figures 4a à 4c.

Par ailleurs, les moyens de diffusion 13 se présentent également sous la forme d'une capsule 13a de forme générale similaire à celle des figures 4a à 4c.

La seconde ouverture 13c présente également un contour sensiblement rectangulaire. En outre, sa petite dimension 1 est supérieure à celle des figures 4a à 4c.

Plus précisément, l'une des parois 14c est supprimée et la face 15b du bec prolonge la première paroi 14a, par exemple de manière inclinée par rapport à cette dernière (figure 5c).

Le conduit de sortie 11, ainsi que les moyens de diffusion 13 sont entourés d'une enveloppe 16, par exemple en matière plastique, dont la forme est fonction des impératifs techniques et ergonomiques.

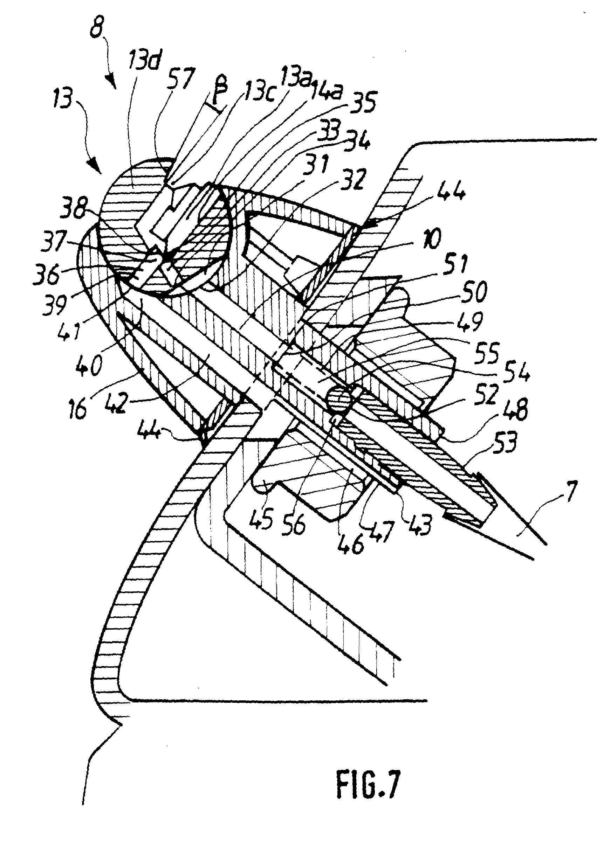

La figure 7 représente un autre mode de réalisation du dispositif de nettoyage 8 de l'invention.

Celui-ci comporte un conduit d'amenée 10 du liquide, destiné à être raccordé à l'extrémité libre de la portion de tuyau 7.

Du côté opposé à la portion de tuyau 7, le conduit d'amenée 10 est en communication avec une chambre 31 logée à la partie inférieure des moyens de diffusion 13, notamment de la sphère 13d, par l'intermédiaire d'un trou de communication 32.

La chambre 31 permet l'orientation de la sphère 13d, par rapport à la surface à nettoyer, tout en assurant le passage du liquide du conduit d'amenée 10 dans la sphère 13d.

La chambre 31, du côté opposé au conduit d'amenée 10, est prolongée par un conduit 33, en communication par l'intermédiaire d'un trou de communication 34 avec la chambre 31, et avec la capsule 13a par l'intermédiaire d'un trou de communication 35.

La capsule 13a possède une forme générale essentiellement similaire à celle représentée sur les figures 4a à 4c.

Selon le mode de réalisation représenté sur la figure 7, les moyens de diffusion 13 comprennent la sphère 13d comportant à l'opposé de la seconde ouverture 13c, un conduit de sortie 36.

Ce conduit de sortie 36 est disposé au niveau de la première paroi 14a et proche du conduit 33.

L'une des extrémités 37 du conduit de sortie 36 est en communication avec la capsule 13a, par l'intermédiaire d'un trou de communication 38, et l'autre extrémité 39 du conduit de sortie 36 est en communication avec une chambre 40 ménagée dans l'enveloppe 16, par l'intermédiaire d'un trou de communication 41.

La chambre 40 est prolongée par un conduit d'évacuation 42, par exemple sensiblement parallèle au conduit d'amenée 10.

Le conduit d'évacuation 42 se prolonge sur toute la longueur de l'enveloppe 16 et débouche par un orifice 43 vers l'extérieur du véhicule, par exemple au niveau de la face interne du bouclier.

L'eau pluviale et/ou le liquide de nettoyage ne restent pas, de cette façon, à l'intérieur du dispositif de nettoyage 8 mais sont évacués vers l'extérieur.

L'étanchéité du dispositif de nettoyage 8 est assurée par exemple par un ou plusieurs joints 44 placés entre le bouclier ou la calandre du véhicule recevant le dispositif de nettoyage 8 et la région de l'enveloppe 16 à l'opposé de la sphère 13d.

La fixation du dispositif de nettoyage 8 sur le bouclier ou la calandre du véhicule peut être assurée par un écrou 45, grâce à un filetage 46 ménagé sur la paroi externe 47 de l'enveloppe 16.

De préférence, l'écrou 45 et le filetage correspondant de l'enveloppe 16, sont placés sur la partie non visible de l'enveloppe 16.

L'extrémité 48 de l'enveloppe 16 opposée à la sphère 13d est munie d'un clapet anti-retour comprenant un conduit 49 en communication par l'une de ses extrémités 50 avec l'extrémité 51 du conduit d'amenée 10 opposée à la sphère 13d.

Le conduit 49 est, par son autre extrémité 52, en communication avec un embout 53, de section transversale inférieure à celle du conduit 49, et sur lequel est fixé le tuyau 7.

A l'intérieur du conduit 49, une bille mobile 54 est maintenue en place contre l'extrémité 52 du conduit 49 située du côté de l'embout 53, grâce à un ressort 55 logé dans le conduit 49.

Un joint torique 56 disposé au niveau de l'extrémité 52 du conduit 49 en communication avec l'embout 53, assure l'étanchéité du système.

Ainsi, lorsque le liquide de nettoyage arrive par le tuyau 7 et passe dans l'embout 53, la pression exercée par le liquide fait remonter la bille mobile 54 en comprimant le ressort 55.

Le liquide de nettoyage peut alors passer dans le conduit 49 puis dans le conduit d'amenée 10 et la capsule 13a.

Lorsque le dispositif de nettoyage 8 n'est plus approvisionné en liquide de nettoyage, le ressort 55 retourne à son état initial en repoussant la bille mobile 54 contre le joint torique 56, empêchant ainsi le liquide de nettoyage de repasser dans l'embout 53.

Il va de soi que le clapet anti-retour et/ou le système d'évacuation de l'eau pluviale et/ou du liquide de nettoyage tels que décrits plus spécialement avec le mode de réalisation de la figure 7, peuvent également être installés sur les modes de réalisation des figures 4 et 5.

Selon une forme particulière d'exécution, la paroi 14b de la sphère 13d comporte du côté de l'ouverture 13c, une région terminale 57 en léger décrochement par rapport au plan passant par la paroi 14b.

Plus particulièrement, le plan confondu avec la surface formée par la partie terminale 57 fait avec le plan confondu avec la surface formée par la paroi 14b un angle β de quelques degrés.

Ainsi, le réglage des moyens de diffusion par rapport à la surface à nettoyer peut être effectué, sans risque d'endommager la partie terminale 57 de la paroi 14b -et donc la nappe de liquide distribué- en introduisant un outil de réglage dans l'ouverture 13c, selon une direction sensiblement parallèle à la paroi 14b, et en modifiant la position de la sphère 13d dans l'enveloppe 16.

La forme particulière des moyens de diffusion 13 des modes de réalisation qui viennent d'être décrits leur permet de diffuser le liquide de manière sensiblement uniforme en nappe, projetée sur la surface 9 suivant une ligne sensiblement parallèle et située vers le bord supérieur 9a de la surface à nettoyer - dans le cas présent du projecteur 9 - (voir notamment la figure 2).

Ainsi, le liquide est distribué sur la surface 9, en nappe, s'étendant depuis sensiblement le bord supérieur 9a jusque sensiblement le bord inférieur 9b de la surface.

La nappe du liquide est ensuite couchée naturellement sur la surface 9, notamment sous l'effet dynamique de l'air.

Puis, lorsque le véhicule est en mouvement, le liquide attaque le bas du projecteur 9 et remonte le long de celui-ci, en arrachant la salissure sur son passage.

Cet effet permet d'améliorer le nettoyage de la surface 9 par rapport à une simple pulvérisation du liquide, que le véhicule soit à l'arrêt ou en mouvement.

D'autre part, la projection du liquide en nappe présente un autre avantage considérable.

En effet, que l'on utilise de l'eau pure ou bien de l'eau mélangée à un agent anti-gel, tel que du glycol, ou un agent de nettoyage, le résultat reste constant.

Comme indiqué précédemment, la forme et la dimension de la capsule 13a et du conduit de sortie 11 dépendent de la forme et de la dimension de la nappe souhaitée, et notamment du projecteur 9 à nettoyer.

Dans les modes de réalisation représentés, le dispositif de nettoyage 8 est fixé à proximité du bord inférieur 9b du projecteur 9, de préférence vers le milieu M du segment formant ledit bord 9b (figure 2).

La seconde ouverture 13c -plus précisément ses bords longitudinaux sensiblement parallèles de dimention L, formés par les faces 15a et 15b- s'étend sensiblement parallèlement au bord supérieur 9a et est dirigée vers le bord supérieur 9a.

En outre, dans un autre mode de réalisation, on peut prévoir de disposer le dispositif de nettoyage 8 à proximité du bord supérieur 9a du projecteur 9, avec sa seconde ouverture 13c proche, en regard et sensiblement parallèle au bord supérieur 9a.

Dans un tel mode de réalisation (non représenté), le liquide serait ainsi projeté directement sur le projecteur 9 à partir de son bord supérieur 9a pour descendre en direction du bord inférieur 9b, comme c'est le cas dans les modes de réalisation précédents.

Dans ces conditions, on pourrait en outre prévoir que la dimension la plus grande L de la seconde ouverture 13c soit sensiblement égale à la longueur L' du bord supérieur 9a.

Selon encore un autre mode de réalisation, il est envisageable de prévoir que le liquide de nettoyage est diffusé, pour chaque projecteur 9, sous la forme de deux nappes de liquide.

Cette variante de réalisation est en particulier envisageable dans le cas de projecteurs du type "lampe à décharge".

Dans ce type de projecteurs, les surfaces traversées par le faisceau lumineux sont réduites par rapport à des projecteurs classiques et sont généralement de forme circulaire et au nombre de deux, l'une correspondant à la lampe utilisée pour les feux de croisement et l'autre correspondant à la lampe utilisée pour les feux de route.

Avec ce type d'optique, il n'est donc pas nécessaire de balayer la totalité de la surface du projecteur 9, mais uniquement les surfaces traversées par les faisceaux lumineux.

Pour ce faire, la paroi 14b de la capsule 13a est munie d'une saillie, dirigée vers l'extérieur de la paroi 14b -et donc vers la paroi 14a- (non représentée sur les figures).

Cette saillie est disposée sur la majeure partie et sensiblement au centre de la paroi 14b, sa section transversale augmentant depuis le côté de la paroi 14b à l'opposé de la seconde ouverture 13c vers le côté de la paroi 14b situé vers la seconde ouverture 13c.

De cette façon, le liquide de nettoyage est, au fur et à mesure de son trajet dans la capsule 13a, divisé en deux nappes distinctes qui seront diffusées sur un projecteur du type à lampe à décharge.

Selon une forme de réalisation, la hauteur de la saillie, par rapport au plan passant par la paroi 14b, est d'environ 1 mm.

Il est entendu en outre que la forme de l'enveloppe 16, ainsi que notamment l'inclinaison de la paroi déflectrice 14b, seraient adaptées dans un tel cas.

Bien entendu, l'invention n'est pas limitée aux modes de réalisation qui viennent d'être décrits, d'autres variantes pouvant être envisagées sans pour autant sortir du cadre de l'invention.

L'invention pourrait également s'appliquer au nettoyage d'un unique projecteur de véhicule automobile. Un tel système de netoyage serait similaire à celui de la figure 1. Il ne comporterait néanmoins qu'un unique tuyau, par exemple du type principal 3 reliant le dispositif de nettoyage 8 ou le clapet anti-retour 6 à la pompe 2.

## Revendications

1. Système de nettoyage, au moyen d'un liquide, d'une surface (9) faisant partie d'un ensemble, ladite surface (9) étant de dimension relativement faible, et étant susceptible de recevoir des salissures, ladite surface étant en outre notamment délimitée par un bord supérieur (9a) et un bord inférieur (9b) sensiblement horizontaux et en regard l'un de l'autre, le système de nettoyage comprenant des moyens d'amenée du liquide et un dispositif de nettoyage (8) comportant :
- un conduit d'amenée (10) du liquide, relié aux moyens d'amenée ;
- au moins un conduit de sortie (11) du liquide, en communication avec le conduit d'amenée (10) par l'intermédiaire d'un trou de communication (12) ; et
- des moyens de diffusion (13) en communication avec le ou les conduits de sortie (11) du côté opposé au trou de communication (12);
les moyens de diffusion (13) étant réalisés de sorte qu'ils diffusent de manière sensiblement uniforme le liquide suivant une ligne sensiblement parallèle et située vers le bord supérieur de la surface, le liquide étant distribué sur ladite surface (9) en nappe s'étendant entre sensiblement le bord supérieur (9a) et sensiblement le bord inférieur (9b) de la surface (9) ; et les moyens d'amenée étant conformés de manière à distribuer le liquide à pression sensiblement faible;
les moyens de diffusion (13) comprenant une pièce creuse (13a) comportant une première ouverture (13b) en communication avec le ou les conduits de sortie (11) et une seconde ouverture (13c) allongée, opposée à la première ouverture (13b) et en communication avec l'extérieur du dispositif de nettoyage (8),
**caractérisé en ce que** la seconde ouverture (13c) est disposée par rapport à la première ouverture (13b) de sorte que le liquide destiné à provenir du conduit de sortie (11) soit défléchi contre une paroi (14b) de la pièce creuse (13c) ladite paroi étant en regard de la première ouverture (13b).

2. Système de nettoyage selon la revendication 1, **caractérisé en ce que** la pièce creuse (13a) présente une forme générale de prisme, délimitée d'une part, par une première et une deuxième parois (14a, 14b), opposées et en regard, et d'autre part, par une pluralité de parois latérales (14c) adjacentes, reliant entre elles les première et deuxième parois (14a, 14b).

3. Système de nettoyage selon la revendication 2, **caractérisé en ce que** la première paroi (14a) comporte la première ouverture (13b) tandis que la deuxième paroi (14b) délimite au moins pour partie la seconde ouverture (13c).

4. Système de nettoyage selon la revendication 2 ou 3, **caractérisé en ce que** la première paroi (14a) s'étend sensiblement perpendiculairement à l'axe du conduit de sortie (11).

5. Système de nettoyage selon l'une des revendications 2 à 4, **caractérisé en ce que** la deuxième paroi (14b) s'étend de manière sensiblement inclinée suivant un angle (α) compris entre 15° et 25° par rapport à la première paroi (14a).

6. Système de nettoyage selon l'une des revendications 2 à 5, **caractérisé en ce que** la deuxième paroi (14b) est prolongée par un bec (15) débouchant sur l'extérieur du dispositif de nettoyage (8), par la seconde ouverture (13c).

7. Système de nettoyage selon la revendication 6, **caractérisé en ce que** le bec (15) est délimité par deux faces (15a, 15b) en regard, et convergeant vers la seconde ouverture (13c), l'une des faces (15a) prolongeant la deuxième paroi (14b).

8. Système de nettoyage selon la revendication 7, **caractérisé en ce que** le bec (15) est en outre délimité par deux flancs latéraux en regard, reliant entre elles les faces (15a, 15b).

9. Système de nettoyage selon l'une des revendications 1 à 8, **caractérisé en ce que** les moyens de diffusion sont réalisés de sorte que la seconde ouverture (13c) soit orientable par rapport à la surface à nettoyer (9).

10. Système de nettoyage selon l'une des revendications 1 à 9, **caractérisé en ce que** la seconde ouverture (13c) est étroite.

11. Système de nettoyage selon l'une des revendications 1 à 10, **caractérisé en ce que** la dimension la plus grande (L) de la seconde ouverture (13c) est de l'ordre d'environ 22 fois plus petite que la longueur (L') du bord supérieur (9a) de la surface (9).

12. Système de nettoyage selon l'une des revendications 1 à 11, **caractérisé en ce que** la dimension la plus petite de la seconde ouverture (13c) est de l'ordre d'environ 100 fois plus petite que la distance (d) séparant le bord supérieur (9a) du bord inférieur (9b) de la surface (9).

13. Système de nettoyage selon l'une quelconque des revendications 1 à 12, **caractérisé en ce que** le conduit d'amenée (10) est en communication avec une chambre (31) logée à la partie inférieure des moyens de diffusion (13), par l'intermédiaire d'un trou de communication (32), la chambre (31) étant prolongée, du côté opposé au conduit d'amenée (10) par un conduit (33), en communication par l'intermédiaire d'un trou de communication (34), avec la chambre (31) et avec la capsule (13a) par l'intermédiaire d'un trou de communication (35).

14. Système de nettoyage selon l'une quelconque des revendications 1 à 13, **caractérisé en ce que** les moyens de diffusion (13) comprennent une sphère (13d) comportant, à l'opposé d'une seconde ouverture (13c), un conduit de sortie (36), en communication, par l'une de ses extrémités (37) avec la capsule (13a) et par son autre extrémité (39) avec une chambre (40), prolongée par un conduit d'évacuation (42) débouchant par un orifice (43) vers l'extérieur du véhicule.

15. système de nettoyage selon l'une quelconque des revendications 1 à 14, **caractérisé en ce que** les moyens de diffusion (13) comportent un clapet anti-retour comprenant un conduit (49) en communication par l'une de ses extrémité (50) avec l'extrémité (51) du conduit d'amenée (10) opposée à la sphère (13d), le conduit (49) étant, par son autre extrémité (52) en communication avec un embout (53), de section transversale inférieure à celle du conduit (49), sur lequel est fixé le tuyau (7).

16. Système selon la revendication 15, **caractérisé en ce qu'**une bille mobile (54) est placée à l'intérieur du conduit (49), la bille (54) étant maintenue en place contre l'extrémité (52) du conduit (49) située du côté de l'embout (53), grâce à un ressort (55) logé dans le conduit (49).

17. système de nettoyage selon la revendication 15 ou 16, **caractérisé en ce qu'**un joint torique (56) est disposé au niveau de l'extrémité (52) du conduit (49) en communication avec l'embout (53).

18. Système de nettoyage selon l'une quelconque des revendications 1 à 17, **caractérisé en ce que** les moyens de diffusion (13) comportent une saillie dirigée vers l'extérieur de la paroi (14b), vers la paroi (14a), disposée sur la majeure partie et sensiblement au centre de la paroi (14b), la section transversale de la saillie augmentant depuis le côté de la paroi (14b) à l'opposé de la seconde ouverture (13c) vers le côté de la paroi (14b) situé vers la seconde ouverture (13c).

19. Système de nettoyage selon l'une quelconque des revendications 2 à 18, **caractérisé en ce que** la paroi (14b) comporte, du côté de l'ouverture (13c), une région terminale (57), le plan confondu avec la surface formée par la région terminale (57) formant avec le plan confondu avec la surface formée par la paroi (14b) un angle de quelques degrés.

20. Système de nettoyage, selon l'une quelconque des revendications 1 à 19, **caractérisé en ce que** les moyens d'amenée du liquide comportent :
- un réservoir (1) destiné à contenir le liquide de nettoyage ;
- un tuyau principal (3) reliant le réservoir (1) au conduit d'amenée (10) du dispositif de nettoyage (8) ;
- une pompe (2) montée sur le réservoir (1) et reliée au tuyau principal (3).

21. Système de nettoyage selon la revendication 20, **caractérisé en ce que** la pompe (2) est du type fonctionnant à basse pression, à sortie unique, à deux sorties fonctionnant en alternance ou simultanément.

22. Système de nettoyage selon la revendication 20, **caractérisé en ce que** le réservoir (1) est logé dans une zone protégée du froid, par exemple à l'intérieur d'une aile d'un véhicule ou dans le compartiment moteur.

23. Système de nettoyage selon l'une quelconque des revendications 1 à 22, **caractérisé en ce qu'**il comporte des tuyaux supplémentaires (4, 7).

24. Système de nettoyage selon la revendication 23, **caractérisé en ce que** les tuyaux (3, 4, 7) sont réalisés en matière plastique, par exemple en polychlorure de vinyle, en caoutchouc EPDM et présentent un diamètre minimal d'environ 3,5 mm, par exemple de 4 à 6 mm.

25. système de nettoyage selon la revendication 23 ou 24, **caractérisé en ce que** le tuyau (4) relié à la sortie d'un raccord (5), présentant le débit le plus faible est d'une longueur réduite par rapport au second tuyau (4) relié à la sortie du même raccord (5) et présentant le débit le plus important.

26. Système de nettoyage selon l'une quelconque des revendications 1 à 25, **caractérisé en ce qu'**il comporte en outre un clapet anti-retour (6), disposé à la jonction entre le tuyau principal (3) et le conduit d'amenée (10) du dispositif de nettoyage (8).

27. Système de nettoyage selon l'une quelconque de revendications 1 à 26, **caractérisé en ce que** le liquide est de l'eau ou de l'eau additionnée à un agent anti-gel, tel que notamment du glycol, et/ou à un agent de nettoyage.

28. Système de nettoyage selon l'une quelconque des revendications 1 à 27, **caractérisé en ce que** le dispositif de nettoyage (8) est disposé de sorte que la seconde ouverture (13c) s'étende sensiblement parallèlement au bord supérieur (9a) de la surface à nettoyer (9).

29. Système de nettoyage selon l'une quelconque des revendications 1 à 28, **caractérisé en ce que** le dispositif de nettoyage (8) est fixé à proximité du bord inférieur (9b) de la surface (9), la seconde ouverture (13c) s'étendant sensiblement parallèlement et étant dirigée vers le bord supérieur (9a).

30. Système de nettoyage selon l'une quelconque des revendications 1 à 29, **caractérisé en ce que** le dispositif de nettoyage (8) est fixé à proximité du bord supérieur (9a) de la surface (9), la seconde ouverture (13c) étant proche, en regard et sensiblement parallèle audit bord (9a).

31. Ensemble adapté à être déplacé, notamment du type une partie au moins d'un véhicule, comprenant :
- au moins une surface (9) de relativement faible dimension par rapport à l'ensemble, et susceptible de recevoir des salissures, ladite surface étant notamment du type protégeant le dispositif lumineux, par exemple frontal, d'un véhicule ; et
- un dispositif du système de nettoyage de la surface (9) selon l'une quelconque des revendications 1 à 30.

32. Ensemble selon la revendication 31, **caractérisé en ce qu'**il forme une partie au moins d'un véhicule automobile, la surface à nettoyer (9) étant un projecteur frontal du véhicule automobile.

33. Ensemble selon la revendication 31, **caractérisé en ce qu'**il forme une partie au moins d'un véhicule automobile, et **en ce qu'**il comprend au moins deux surfaces à nettoyer (9) correspondant respectivement à un projecteur frontal du véhicule automobile.

34. Ensemble selon la revendication 33, **caractérisé en ce qu'**il comporte un dispositif de nettoyage (8) par projecteur (9), les dispositifs de nettoyage (8) étant reliés au tuyau principal (3) par l'intermédiaire d'un tuyau supplémentaire (4) respectif, en communication d'une part avec le conduit d'amenée (10) du dispositif de nettoyage et d'autre part avec un raccord en Té (5), lui-même relié au tuyau principal (3).

35. Ensemble selon l'une quelconque des revendications 32 à 34, **caractérisé en ce que** le (ou les) dispositif (s) de nettoyage (8) est (sont) fixé(s) rigidement en saillie par rapport à la carrosserie du véhicule automobile de sorte qu'il(s) ne dépasse(nt) pas l'aplomb du, véhicule automobile.

36. Ensemble selon l'une quelconque des revendications 32 à 35, **caractérisé en ce que** le réservoir (1) et les tuyaux (3, 4, 7) sont du type de ceux utilisés pour le nettoyage des vitres, telles que le pare-brise, d'un véhicule automobile.

37. Ensemble selon l'une quelconque des revendications 32 à 36, **caractérisé en ce que** le réservoir (1) est commun à celui utilisé pour le nettoyage du pare-brise avant du véhicule automobile.

## Claims

1. A system for cleaning, by means of a liquid, a surface (9) forming part of an assembly, said surface (9) being of relatively small size, and being liable to receive dirt, said surface also being in particular delimited by an upper edge (9a) and a lower edge (9b) which are substantially horizontal and facing one another, the cleaning system comprising liquid supply means and a cleaning device (8) comprising:
- a liquid supply duct (10), connected to the supply means;
- at least one liquid output duct (11), in communication with the supply duct (10) by means of a communication hole (12); and
- distribution means (13) in communication with the output duct or ducts (11) on the side opposite to the communication hole (12);
the distribution means (13) being implemented in such a way that they distribute the liquid substantially uniformly along a line substantially parallel to and situated towards the upper edge of the surface, the liquid being distributed over said surface (9) in a sheet extending between substantially the upper edge (9a) and substantially the lower edge (9b) of the surface (9); and the supply means being shaped so as to distribute the liquid at substantially low pressure;
the distribution means (13) comprising a hollow component (13a) comprising a first opening (13b) in communication with the output duct or ducts (11) and a second elongated opening (13c), opposite the first opening (13b) and in communication with the outside of the cleaning device (8),
**characterised in that** the second opening (13c) is disposed with respect to the first opening (13b) in such a way that the liquid intended to come from the output duct (11) is deflected against a wall (14b) of the hollow component (13a), said wall facing the first opening (13b).

2. A cleaning system according to Claim 1, **characterised in that** the hollow component (13a) has an overall shape of a prism, delimited on the one hand by a first and a second wall (14a, 14b), which are opposite and facing, and on the other hand by a plurality of adjacent lateral walls (14c), connecting between them the first and second walls (14a, 14b).

3. A cleaning system according to Claim 2, **characterised in that** the first wall (14a) comprises the first opening (13b) while the second wall (14b) delimits at least in part the second opening (13c).

4. A cleaning system according to Claim 2 or 3, **characterised in that** the first wall (14a) extends substantially perpendicular to the axis of the output duct (11).

5. A cleaning system according to one of Claims 2 to 4, **characterised in that** the second wall (14b) extends in a substantially inclined manner at an angle (α) between 15° and 25° with respect to the first wall (14a).

6. A cleaning system according to one of Claims 2 to 5, **characterised in that** the second wall (14b) is extended by a spout (15) opening onto the outside of the cleaning device (8), by means of the second opening (13c).

7. A cleaning system according to Claim 6, **characterised in that** the spout (15) is delimited by two facing faces (15a, 15b), converging towards the second opening (13c), one of the faces (15a) extending the second wall (14b).

8. A cleaning system according to Claim 7, **characterised in that** the spout (15) is also delimited by two facing lateral flanks, connecting between them the faces (15a, 15b).

9. A cleaning system according to one of Claims 1 to 8, **characterised in that** the distribution means are implemented in such a way that the second opening (13c) can be adjusted with respect to the surface to be cleaned (9).

10. A cleaning system according to one of Claims 1 to 9, **characterised in that** the second opening (13c) is narrow.

11. A cleaning system according to one of Claims 1 to 10, **characterised in that** the largest dimension (L) of the second opening (13c) is of the order of approximately 22 times smaller than the length (L') of the upper edge (9a) of the surface (9).

12. A cleaning system according to one of Claims 1 to 11, **characterised in that** the smallest dimension of the second opening (13c) is of the order of approximately 100 times smaller than the distance (d) separating the upper edge (9a) from the lower edge (9b) of the surface (9).

13. A cleaning system according to any one of Claims 1 to 12, **characterised in that** the supply duct (10) is in communication with a chamber (31) housed in the lower part of the distribution means (13), by means of a communication hole (32), the chamber (31) being extended, on the side opposite to the supply duct (10), by a duct (33), in communication by means of a communication hole (34) with the chamber (31) and with the enclosure (13a) by means of a communication hole (35).

14. A cleaning system according to any one of Claims 1 to 13, **characterised in that** the distribution means (13) comprise a sphere (13d) comprising, on the opposite side from a second opening (13c), an output duct (36) in communication by one of its ends (37) with the enclosure (13a) and by its other end (39) with a chamber (40), extended by a drainage duct (42) opening through an aperture (43) to the outside of the vehicle.

15. A cleaning system according to any one of Claims 1 to 14, **characterised in that** the distribution means (13) comprise a non-return valve comprising a duct (49) in communication by one of its ends (50) with the end (51) of the supply duct (10) opposite to the sphere (13d), the duct (49) being, by its other end (52), in communication with a joining piece (53), of cross-section smaller than that of the duct (49), on which the tube (7) is fixed.

16. A system according to Claim 15, **characterised in that** a movable ball (54) is placed inside the duct (49), the ball (54) being held in place against the end (52) of the duct (49) situated next to the joining piece (53), by means of a spring (55) housed in the duct (49).

17. A cleaning system according to Claim 15 or 16, **characterised in that** an O-ring (56) is disposed at the end (52) of the duct (49) in communication with the joining piece (53).

18. A cleaning system according to any one of Claims 1 to 17, **characterised in that** the distribution means (13) comprise a projection directed towards the outside of the wall (14b), towards the wall (14a), disposed on the major part and substantially at the centre of the wall (14b), the cross-section of the projection increasing from the side of the wall (14b) on the opposite side from the second opening (13c) towards the side of the wall (14b) situated towards the second opening (13c).

19. A cleaning system according to any one of Claims 2 to 18, **characterised in that** the wall (14b) comprises, on the side of the opening (13c), a terminal region (57), the plane coincident with the surface formed by the terminal region (57) forming, with the plane coincident with the surface formed by the wall (14b), an angle of a few degrees.

20. A cleaning system according to any one of Claims 1 to 19, **characterised in that** the liquid supply means comprise:
- a reservoir (1) intended to contain the cleaning liquid;
- a main tube (3) connecting the reservoir (1) to the supply duct (10) of the cleaning device (8);
- a pump (2) mounted on the reservoir (1) and connected to the main tube (3).

21. A cleaning system according to Claim 20, **characterised in that** the pump (2) is of the type operating at low pressure, with a single output, or with two outputs operating alternately or simultaneously.

22. A cleaning system according to Claim 20, **characterised in that** the reservoir (1) is housed in an area protected from the cold, for example inside a wing of a vehicle or in the engine compartment.

23. A cleaning system according to any one of Claims 1 to 22, **characterised in that** it comprises supplementary tubes (4, 7).

24. A cleaning system according to Claim 23, **characterised in that** the tubes (3, 4, 7) are produced from plastic material, for example polyvinyl chloride, or EPDM rubber, and have a minimum diameter of approximately 3.5 mm, for example from 4 to 6 mm.

25. A cleaning system according to Claim 23 or 24, **characterised in that** the tube (4) connected to the output of a connector (5) having the lowest flow rate is of a reduced length compared with the second tube (4) connected to the output of the same connector (5) and having the highest flow rate.

26. A cleaning system according to any one of Claims 1 to 25, **characterised in that** it also comprises a non-return valve (6), disposed at the junction between the main tube (3) and the supply duct (10) of the cleaning device (8).

27. A cleaning system according to any one of Claims 1 to 26, **characterised in that** the liquid is water or water with the addition of an anti-freeze agent, such as in particular glycol, and/or a cleaning agent.

28. A cleaning system according to any one of Claims 1 to 27, **characterised in that** the cleaning device (8) is disposed in such a way that the second opening (13c) extends substantially parallel to the upper edge (9a) of the surface to be cleaned (9).

29. A cleaning system according to any one of Claims 1 to 28, **characterised in that** the cleaning device (8) is fixed in proximity to the lower edge (9b) of the surface (9), the second opening (13c) extending substantially parallel to and being directed towards the upper edge (9a).

30. A cleaning system according to any one of Claims 1 to 29, **characterised in that** the cleaning device (8) is fixed in proximity to the upper edge (9a) of the surface (9), the second opening (13c) being close, facing and substantially parallel to said edge (9a).

31. An assembly adapted to be moved, in particular of the type of at least part of a vehicle, comprising:
- at least one surface (9) of relatively small size compared with the assembly, and liable to receive dirt, said surface being in particular of the type protecting the lighting device, for example the front lighting device, of a vehicle; and
- a device of the system for cleaning the surface (9) according to any one of Claims 1 to 30.

32. An assembly according to Claim 31, **characterised in that** it forms at least part of a motor vehicle, the surface to be cleaned (9) being a front headlight of the motor vehicle.

33. An assembly according to Claim 31, **characterised in that** it forms at least part of a motor vehicle, and **in that** it comprises at least two surfaces to be cleaned (9) corresponding respectively to a front headlight of the motor vehicle.

34. An assembly according to Claim 33, **characterised in that** it comprises a cleaning device (8) per headlight (9), the cleaning devices (8) being connected to the main tube (3) by means of a respective supplementary tube (4), in communication on the one hand with the supply duct (10) of the cleaning device and on the other hand with a T-connector (5), itself connected to the main tube (3).

35. An assembly according to any one of Claims 32 to 34, **characterised in that** the cleaning device or devices (8) are rigidly fixed, projecting with respect to the bodywork of the motor vehicle in such a way that they do not jut out beyond the verticality of the motor vehicle.

36. An assembly according to any one of Claims 32 to 35, **characterised in that** the reservoir (1) and the tubes (3, 4, 7) are of the type of those used for cleaning panes of glass, such as the windscreen, of a motor vehicle.

37. An assembly according to any one of Claims 32 to 36, **characterised in that** the reservoir (1) is common to that used for cleaning the front windscreen of the motor vehicle.

## Patentansprüche

1. Reinigungssystem einer zu einem Aufbau gehörenden Fläche (9) mittels einer Flüssigkeit, wobei die genannte Fläche (9) relativ geringe Abmessungen aufweist und zur Aufnahme von Verschmutzungen geeignet ist, wobei die genannte Fläche darüber hinaus insbesondere durch einen oberen Rand (9a) und einen unteren Rand (9b) deutlich horizontal und gegenüber voneinander begrenzt ist, wobei das Reinigungssystem Zuführmittel der Flüssigkeit und eine Folgendes umfassende Reinigungsvorrichtung (8) umfasst:
- einen mit den Zuführmitteln verbundenen Zuführkanal (10) der Flüssigkeit;
- wenigstens einen mit dem Zuführkanal (10) mittels eines Verbindungslochs (12) in Verbindung stehenden Ausgangskanal (11) der Flüssigkeit; und
- mit dem Ausgangskanal oder den Ausgangskanälen (11) auf der dem Verbindungsloch (12) gegenüber liegenden Seite in Verbindung stehende Verteilermittel (13);
wobei die Verteilermittel (13) derart realisiert sind, dass sie die Flüssigkeit deutlich gleichmäßig gemäß einer deutlich parallelen und zum oberen Rand der Fläche hin liegenden Linie verteilen, wobei die Flüssigkeit auf der genannten Fläche (9) als Fläche verteilt wird, die sich deutlich zwischen dem oberen Rand (9a) und deutlich dem unteren Rand (9b) der Fläche (9) befindet; und wobei die Zuführmittel derart angepasst sind, dass die Flüssigkeit unter deutlich niedrigem Druck verteilt wird,
die Verteilermittel (13) umfassen ein hohles Teil (13a) mit einer ersten, mit dem Ausgangskanal (11) oder den Ausgangskanälen (11) und einer zweiten, länglichen, der ersten Öffnung (13b) gegenüber liegenden und mit der Außenseite der Reinigungsvorrichtung (8) in Verbindung stehenden Öffnung (13c) in Verbindung stehenden Öffnung (13b),
**dadurch gekennzeichnet, dass** die zweite Öffnung (13c) im Verhältnis zur ersten Öffnung (13b) derart angeordnet ist, dass die Flüssigkeit, die dazu bestimmt ist, aus dem Ausgangskanal (11) zu kommen, gegen eine Wand (14b) des hohlen Teils (13) abgelenkt wird, wobei die genannte Wand gegenüber der ersten Öffnung (13b) liegt.

2. Reinigungssystem gemäß Anspruch 1, **dadurch gekennzeichnet, dass** das hohle Teil (13a) eine allgemeine, einerseits durch eine erste und eine zweite, jeweils einander gegenüber liegende Wand (14a, 14b) und andererseits durch eine Vielzahl von lateralen, anliegenden, untereinander die erste und zweite Wand (14a, 14b) verbindende Wände (14c) begrenzte Prismaform aufweist.

3. Reinigungssystem gemäß Anspruch 2, **dadurch gekennzeichnet, dass** die erste Wand (14a) die erste Öffnung (13b) umfasst, während die zweite Wand (14b) wenigstens zum Teil die zweite Öffnung (13c) begrenzt.

4. Reinigungssystem gemäß Anspruch 2 oder 3, **dadurch gekennzeichnet, dass** die erste Wand (14a) sich deutlich senkrecht zur Achse des Ausgangskanals (11) erstreckt.

5. Reinigungssystem gemäß Anspruch 2 bis 4, **dadurch gekennzeichnet, dass** die zweite Wand (14b) sich im Verhältnis zur ersten Wand (14a) gemäß einem zwischen 15° und 25° inbegriffenen Winkel deutlich geneigt erstreckt.

6. Reinigungssystem gemäß Anspruch 2 bis 5, **dadurch gekennzeichnet, dass** die zweite Wand (14b) durch eine zur Außenseite der Reinigungsvorrichtung (8) durch die zweite Öffnung (13c) mündende Nase (15) verlängert wird.

7. Reinigungssystem gemäß Anspruch 6, **dadurch gekennzeichnet, dass** die Nase (15) durch zwei gegenüber liegende und zur zweiten Öffnung (13c) hin zusammenlaufende Flächen (15a, 15b) begrenzt wird, wobei eine der Seiten (15a) die zweite Wand (14b) verlängert.

8. Reinigungssystem gemäß Anspruch 7, **dadurch gekennzeichnet, dass** die Nase (15) darüber hinaus durch zwei laterale, gegenüber liegende, die Seiten (15a, 15b) untereinander verbindende Flanken begrenzt wird.

9. Reinigungssystem gemäß Anspruch 1 bis 3, **dadurch gekennzeichnet, dass** die Verteilermittel derart realisiert sind, dass die zweite Öffnung (13c) im Verhältnis zur zu reinigenden Fläche (9) ausgerichtet werden kann.

10. Reinigungssystem gemäß Anspruch 1 bis 9, **dadurch gekennzeichnet, dass** die zweite Öffnung (13c) eng ist.

11. Reinigungssystem gemäß Anspruch 1 bis 10, **dadurch gekennzeichnet, dass** die größte Abmessung (L) der zweiten Öffnung (13c) in der Größenordnung von ungefähr 22 Mal kleiner als die Länge (L') des oberen Randes (9a) der Fläche (9) ist.

12. Reinigungssystem gemäß Anspruch 1 bis 11, **dadurch gekennzeichnet, dass** die kleinste Abmessung der zweiten Öffnung (13c) in der Größenordnung von ungefähr 100 Mal kleiner als die den oberen Rand (9a) vom unteren Rand (9b) der Fläche (9) trennenden Entfernung (d) ist.

13. Reinigungssystem gemäß Anspruch 1 bis 12, **dadurch gekennzeichnet, dass** der Zuführkanal (10) mit einer am unteren Teil der Verteilermittel (13) mittels eines Verbindungslochs (32) untergebrachten Kammer (31) in Verbindung steht, wobei die Kammer (32) auf der dem Zuführkanal (10) gegenüber liegenden Seite durch einen mittels eines Verbindungsloches (34) mit der Kammer (31) und über ein Verbindungsloch (35) mit der Kapsel (13a) in Verbindung stehenden Kanal (33) verlängert wird.

14. Reinigungssystem gemäß Anspruch 1 bis 13, **dadurch gekennzeichnet, dass** die Verteilermittel (13) eine an der gegenüber liegenden Seite einer zweiten Öffnung (13c) einen durch eines seiner Enden (37) mit der Kapsel (13a) und über sein anderes Ende (39) mit einer durch einen durch eine Öffnung (43) zur Außenseite des Fahrzeugs mündenden Ablasskanal (42) verlängerte Kammer (40) in Verbindung stehenden Ausgangskanal (36) umfassende Sphäre (13d) umfassen.

15. Reinigungssystem gemäß Anspruch 1 bis 14, **dadurch gekennzeichnet, dass** die Verteilermittel (13) ein Rückschlagventil mit einem durch einen seiner Enden (50) mit dem Ende (51) des Zuführkanals (10) gegenüber der Sphäre (13d) in Verbindung stehenden Kanal (49) umfassen, wobei der Kanal (49) durch sein anderes Ende (52) mit einem Ansatzstück (53) mit einem kleineren Querschnitt als dem des Kanals (49) in Verbindung steht, auf dem das Rohr (7) befestigt ist.

16. Reinigungssystem gemäß Anspruch 15, **dadurch gekennzeichnet, dass** eine mobile Kugel (54) im Innern des Kanals (49) angeordnet wird, wobei die Kugel (54) gegen das sich auf der Seite des Ansatzstücks (53) befindende Ende (52) des Kanals (49) mithilfe einer im Kanal (49) untergebrachten Feder (55) festgehalten wird.

17. Reinigungssystem gemäß Anspruch 15 oder 16, **dadurch gekennzeichnet, dass** ein O-Ring (56) auf der Höhe des Endes (52) des mit dem Ansatzstück (53) in Verbindung stehenden Kanals (49) angeordnet wird.

18. Reinigungssystem gemäß Anspruch 1 bis 17, **dadurch gekennzeichnet, dass** die Verteilermittel (13) einen zur Außenseite der Wand (14b), zur auf dem größeren Teil und deutlich im Zentrum der Wand (14b) angeordneten Wand (14a) gerichteten Vorsprung umfassen, wobei der Querschnitt des Vorsprungs von der Seite der Wand (14b) gegenüber der zweiten Öffnung (13c) zur Seite der sich gegen die zweite Öffnung (13c) befindenden Wand (14b) zunimmt.

19. Reinigungssystem gemäß Anspruch 2 bis 18, **dadurch gekennzeichnet, dass** die Wand (14b) an der Seite der Öffnung (13c) einen Endbereich (57) umfasst, wobei die mit der durch den Endbereich (57) gebildete Fläche mit der mit der durch die Wand (14b) gebildeten Fläche zusammenfallenden Ebene einen Winkel von einigen Grad bildet.

20. Reinigungssystem gemäß Anspruch 1 bis 19, **dadurch gekennzeichnet, dass** die Zuführmittel der Flüssigkeit Folgendes umfassen:
- einen zum Enthalten der Reinigungsflüssigkeit bestimmten Behälter (1);
- ein den Behälter (1) mit dem Zuführkanal (10) der Reinigungsflüssigkeit (8) verbindendes Hauptrohr (3);
- eine auf dem Behälter (1) angebrachte und mit dem Hauptrohr (3) verbundene Pumpe (2).

21. Reinigungssystem gemäß Anspruch 20, **dadurch gekennzeichnet, dass** die Pumpe (2) von der bei niedrigem Druck arbeitenden Art mit einem einzigen Ausgang, mit zwei alternierend oder gleichzeitig arbeitenden Ausgängen ist.

22. Reinigungssystem gemäß Anspruch 20, **dadurch gekennzeichnet, dass** der Behälter (1) in einem vor Kälte geschützten Bereich untergebracht ist, zum Beispiel im Innern eines Kotflügels eines Fahrzeugs oder im Motorraum.

23. Reinigungssystem gemäß Anspruch 1 bis 22, **dadurch gekennzeichnet, dass** es zusätzliche Rohre (4, 7) umfasst.

24. Reinigungssystem gemäß Anspruch 23, **dadurch gekennzeichnet, dass** die Rohre (3, 4, 7) aus Plastikmaterial realisiert sind, zum Beispiel aus Polyvinylchlorid, aus EPDM-Kautschuk, und einen Durchmesser von mindestens ungefähr 3,5 mm, zum Beispiel von 4 bis 6 mm, aufweisen.

25. Reinigungssystem gemäß Anspruch 23 oder 24, **dadurch gekennzeichnet, dass** das mit dem Ausgang eines Anschlusses (5) verbundene, den geringsten Durchsatz aufweisende Rohr (4) im Verhältnis zum zweiten Rohr (4) um eine verkürzte Länge mit dem Ausgang desselben und den höchsten Durchsatz aufweisenden Anschlusses (5) verbunden ist.

26. Reinigungssystem gemäß Anspruch 1 bis 25, **dadurch gekennzeichnet, dass** es darüber hinaus ein an der Verbindungsstelle zwischen dem Hauptrohr (3) und dem Zuführkanal (10) der Reinigungsvorrichtung (8) angeordnetes Rückschlagventil (6) aufweist.

27. Reinigungssystem gemäß Anspruch 1 bis 26, **dadurch gekennzeichnet, dass** die Flüssigkeit Wasser oder einem Frostschutzmittel, wie zum Beispiel insbesondere Glykol und / oder einem Reinigungsmittel hinzugefügtes Wasser ist.

28. Reinigungssystem gemäß Anspruch 1 bis 27, **dadurch gekennzeichnet, dass** die Reinigungsvorrichtung (8) derart angeordnet ist, dass die zweite Öffnung (13c) sich deutlich parallel am oberen Rand (9a) der zu reinigen Fläche (9) erstreckt.

29. Reinigungssystem gemäß Anspruch 1 bis 28, **dadurch gekennzeichnet, dass** die Reinigungsvorrichtung (8) in der Nähe des unteren Randes (9b) der Fläche (9) befestigt ist, wobei sich die zweite Öffnung (13c) deutlich parallel erstreckt und zum oberen Rand (9a) hin gerichtet ist.

30. Reinigungssystem gemäß Anspruch 1 bis 29, **dadurch gekennzeichnet, dass** die Reinigungsvorrichtung (8) in der Nähe des oberen Randes (9a) der Fläche (9) befestigt ist, wobei die zweite Öffnung (13c) in der Nähe, gegenüber und deutlich parallel zu genanntem Rand (9a) ist.

31. Zum Verschieben angepasster Aufbau, insbesondere von der Art wenigstens eines Teils eines Fahrzugs, der Folgendes umfasst:
- wenigstens eine Fläche (9) mit relativ geringer Abmessung im Verhältnis zum Aufbau und die zur Aufnahme von Verschmutzungen geeignet ist, wobei die genannte Fläche insbesondere vom die zum Beispiel vordere Leuchtvorrichtung eines Fahrzeugs schützenden Typ ist; und
- eine Vorrichtung des Reinigungssystems der Fläche (9) gemäß Anspruch 1 bis 30.

32. Aufbau gemäß Anspruch 31, **dadurch gekennzeichnet, dass** er wenigstens einen Teil eines Kraftfahrzeugs bildet, wobei die zu reinigende Fläche (9) ein vorderer Scheinwerfer des Kraftfahrzeugs ist.

33. Aufbau gemäß Anspruch 31, **dadurch gekennzeichnet, dass** er wenigstens einen Teil eines Kraftfahrzeugs bildet und dass er wenigstens zwei jeweils einem vorderen Scheinwerfer des Kraftfahrzeugs entsprechende zu reinigende Flächen (9) umfasst.

34. Aufbau gemäß Anspruch 33, **dadurch gekennzeichnet, dass** er eine Reinigungsvorrichtung (8) pro Scheinwerfer (9) umfasst, wobei die Reinigungsvorrichtungen (8) jeweils durch ein einerseits mit dem Zuführkanal (10) der Reinigungsvorrichtung und andererseits mit einem seinerseits mit dem Hauptrohr (3) verbundenen T-Anschluss (5) in Verbindung stehenden zusätzlichen Rohr (4) mit dem Hauptrohr (3) verbunden sind.

35. Aufbau gemäß Anspruch 32 bis 34, **dadurch gekennzeichnet, dass** die Reinigungsvorrichtung(en) 8 im Verhältnis zur Karosserie des Kraftfahrzeugs derart steif hervorspringend befestigt ist (sind), dass sie nicht senkrecht über das Kraftfahrzeug hervorsteht (hervorstehen).

36. Aufbau gemäß Anspruch 32 bis 35, **dadurch gekennzeichnet, dass** der Behälter (1) und die Rohre (3, 4, 7) von der Art sind, die für die Reinigung von Glasscheiben, wie zum Beispiel der Windschutzscheibe, eines Kraftfahrzeugs verwendet werden.

37. Aufbau gemäß Anspruch 32 bis 36, **dadurch gekennzeichnet, dass** der Behälter (1) mit dem für die Reinigung der vorderen Windschutzscheibe des Kraftfahrzeugs gemeinsam ist.
